(19) Europäisches Patentamt
European Patent Office
Office européen des brevets

(11) Veröffentlichungsnummer: 0 254 174 B1

# (12) EUROPÄISCHE PATENTSCHRIFT

(45) Veröffentlichungstag der Patentschrift: 28.08.91 Patentblatt 91/35

(51) Int. Cl.5: C08F 220/30, C08F 212/00, G11B 7/24

(21) Anmeldenummer: 87110074.9

(22) Anmeldetag: 13.07.87

## (54) Verwendung von härtbaren Reaktionsmassen zur Herstellung von Datenträgern.

Die Akte enthält technische Angaben, die nach dem Eingang der Anmeldung eingereicht wurden und die nicht in dieser Patentschrift enthalten sind.

(30) Priorität: 23.07.86 DE 3624870

(43) Veröffentlichungstag der Anmeldung: 27.01.88 Patentblatt 88/04

(45) Bekanntmachung des Hinweises auf die Patenterteilung: 28.08.91 Patentblatt 91/35

(84) Benannte Vertragsstaaten: AT DE ES FR GB IT NL

(56) Entgegenhaltungen:
EP-A- 0 182 585
US-A- 4 067 853
US-A- 4 306 780

(56) Entgegenhaltungen:
CHEMICAL ABSTRACTS, Band 100, Nr. 6, Februar 1984, Seite 48, Nr. 35532k, Columbus, Ohio, US; & JP-A-58 129 008 (SUWA SEIKOSHA CO. LTD) 01-08-1983
CHEMICAL ABSTRACTS, Band 101, Nr. 12, September 1984, Seite 45, Nr. 92111s, Columbus, Ohio, US; & JP-A-58 217 514 (NIPPON SHOKUBAI K.K. CO. Ltd) 17-12-1983

(73) Patentinhaber: BAYER AG
W-5090 Leverkusen 1 Bayerwerk (DE)

(72) Erfinder: Klöker, Werner, Prof. Dr.
Deswatinesstr. 26
W-4150 Krefeld (DE)
Erfinder: Uerdingen, Walter, Dr.
Humperdinckstr. 41
W-5090 Leverkusen 1 (DE)
Erfinder: Hess, Berhard, Dr.
Kaldenhausener Str. 84
W-4150 Moers 2 (DE)
Erfinder: Schmid, Helmut, Dr.
Wedelstr. 69
W-4150 Krefeld (DE)

EP 0 254 174 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Als Trägermaterialien für Schichten mit magnetisch lesund beschreibbaren Audio-, Video- und EDV-Informationen sind in Form von Bändern, Folien und Platten Thermoplaste, wie gesättigte Polyester, z.B. Polyethylenterephthalat oder dessen Cokondensate, z.B. mit Butandiol-1,4, Polyvinylchlorid und Vinylchlorid-Copolymerisate u.a. bewährte Materialien des Standes der Technik.

Für optisch, vor allem mittels Laser lesbare, Systeme werden z.Z. nur Platten als Speichermedien eingesetzt. Bei den Video-(Laser Vision)-Platten (Durchmesser ca. 30 cm) wird als Trägersubstrat Glas oder Polymethylmethacrylat angewandt.

Von Interesse und beschrieben sind als Substratmaterialien für optische Datenträger Polyvinylchlorid und Polycarbonat (van den Bruck und andere, Journal of Radiation Curing, Januar 1984, Seite 2 ff ; Kunststoff journal 11/1982, S. 6 ff, Kennziffer 2).

Als Materialien für die Datenspeicherung sind weiterhin beschrieben Butylmethacrylat/Methacrylsäure-Copolymerisate (Forestry Ministerium-Paper ; SU 1046736 vom 03.06.82/07.10.83) ;

Terpolymerisate aus Alkylmethacrylat, Styrol und N-Vinylphenyl-n-alkyl- oder -arylthio-harnstoff, Kish University ; SU 873269 vom 30.11.79/15.10.81 ;
thermoplastische Massen, die Poly-N-vinylcarbazol, Trinitrofluorenon, Styrol-Butadien-Copolymerisate enthalten (M.S. Burakina, SU 667950 vom 05.09.77/25.06.79) ;

Polymerisate auf Basis Cyclohexylmethacrylat, JP-A 57186241 vom 11.05.81/16.11.82 ;

Copolymerisate aus Butylmethacrylat und Styrol für die Datenschichten, die aus einer benzolischen Lösung z.B. auf metallische Oberflächen aufgebracht werden (C.V. Gurasch und andere, SU 391597 von 26.04.71/22.11.73) ;
in diesem Zusammenhang ist auch noch die DE-OS 2744479 zu nennen, wonach die Datenträgerschicht durch Strahlenpolymerisation von z.B. 2-Ethylhexylacrylat, 1,1,1-Trimethylolpropantriacrylat auf Träger, z.B. Folien aus Polyvinylchlorid, Polycarbonat, Polyester, Celluloseester usw., aufgebracht wird.

Polymere sind als Substrate für Speicherplatten derzeit bei mehreren Technologien wirtschaftlich von Bedeutung und Interesse :

1. Nicht löschbare optische Speicher (Read Only Memory = ROM oder Optical-Read-Only-Memories = OROM)

1.1 Bei der Herstellung werden durch eine Form digitale Informationen, z.B. in Form von Pits, eingeprägt, die optisch, z.B. mittels Laser, nur zu lesen sind.

1.2 Bei den vom Benutzer "Einmal-beschreib- und -sofort-lesbaren-Systemen" (write-once — ROM oder Direct Read After Write, kurz DRAW genannt) bzw. "Einmal-beschreib- und -oft-lesbaren Systemen" (WORM) wird eine transparente Substratplatte (aus Glas oder Polymermaterial) z.B. mit einer Thermoplastenschicht mit Farbstoffen oder mit einer leicht schmelzbaren Legierung, z.B. auf Basis Selen, Tellur, Bismut oder ähnlichem oder organischen Metallkomplex-Verbindungen, beschichtet und mittels Laser Informations-Spots (Löcher, Blasen, Vertiefungen) durch lokales Schmelzen und Schrumpfen der Schicht erzeugt, die wiederum durch unterschiedliche Reflexion oder Streuung Laser-lesbar sind.

2. "Vielfach-beschreib- und -danach-sofort-lesbare-Systeme" (Erasable Direct Read After Write, kurz E-DRAW oder O(optical)-E-DRAW genannt) bestehen aus einer Polymer- oder Glasplatte, die mit einer dünnen (z.B. ≤ 10 µm dicken) Informationen speichernden Schicht versehen wird. Diese kann bestehen aus:

2.1 Substanzen, die eine Phasenändorung (Phase Change)bei lokaler, starker Lasereinstrahlung zeigen. Solche Substanzen sind u.a. Selen-, Tellur-, Antimon-, Arsen-Verbindungen sowie Farbstoffe und Pigmente. Die durch Laser-Einwirkung erzeugte Information ist wiederum infolge unterschiedlichen Reflexionsverhaltens Laser-lesbar. Diese Systeme werden kurz "PC-E-DRAW-Systeme" genannt.

2.2 Ferromagnetische Legierungen mit einem niedrigen Curie-Punkt, z.B. solche aus der Serie Seltene Erden/Übergangsmetalle, wie Tb-Gd-Fe. Zum "Aus-Lesen" wird die Drehung der Schwingungsrichtung der linear polarisierten Laser-Strahlung genutzt (Kerr- und/oder Farady-Effect).

Beim "Beschreiben der Platte" wird durch einen starken Laser-Impuls bei gleichzeitigem Einwirken eines äußeren Magnetfeldes die Magnetisierung der Speicherschicht umgekehrt und nach Abkühlung unter die Curie-Temperatur damit eine Information magnetisch fixiert. Dieses System bzw. Verfahren wird kurz magnetooptisches (MO-E-DRAW) System genannt.

Laser-lesbare ca. 1,2 mm dicke Audioplatten (compact discs, CD-ROMs) werden als Kopien derzeit nach dem "normalen" Spritzgießverfahren und nach dem Spritzprägeverfahren aus leicht fließendem Polycarbonat hergestellt (H. Löser, Kunststoffjournal 6/1985, S. 26 ff ; Plastverarbeiter 36. Jahrgang, 1985, Nr. 3, S. 10 ff). Dabei werden die digitalen Informationsträger in Form von 0,2-1 mm dicken Metallmatrizen in der Spritzform fixiert.

Die beschriebenen Materialien und die Verarbeitungsmethoden haben jedoch entscheidende Nachteile, die bei den steigenden Anforderungen von der Elektronikindustrie nicht mehr akzeptiert werden können :

1. Glas ist als Trägermaterial schwer, bruchempfindlich, und die entsprechenden qualitativ hochwertigen Platten lassen sich nur schwierig und kostenaufwendig produzieren.

2. Platten, auch mit Informationen, lassen sich zwar einfach im Spritzguß aus Polymethylmethacrylat und Polybutylmethacrylat-Copolymerisaten fertigen ; eine wesentliche Problematik ist jedoch die durch Wasseraufnahme (1,5 bis 3 Gew.-%) hervorgerufene Quellung und die damit verbundene Spannung, der Verzug und die Änderung der Doppelbrechung. Bei der Laser-gelesenen Wiedergabe - nicht nur bei CD-ROMs -führt das zu schweren Störungen.

3. Nachteilig ist auch die geringe Wärmeformbeständigkeit und niedrige Glasübergangstemperatur von Polymethylmethacrylat (Tg : ca. 100 bis 110°C), Butylmethacrylatcopolymerisaten (Tg : < 100°C) und vor allem von PVC (Tg : ca. 80°C).

4. PVC hat weiter den Nachteil einer geringen Transmission, z.B. ca. 75 bis 85%, für die Wellenlänge des Lasers.

5. Weitere Nachteile der im One-Shot aus Thermoplasten hergestellten, mit Informationen (Pits) versehenen, Laser-lesbaren Datenplatten (CD-ROMs) für Audio, Video und EDV können sein : Schwierigkeiten bei Herstellung von Repliken durch ungünstige bis unvollständige Abformbarkeit der Informations-Pits, bedingt durch die relativ zähfließenden Schmelzen ;

6. Problematik der Lebensdauer der Informations-Pits bei höheren Temperaturen (z.B. durch Einwirkung zu hoher Laser-Energie über lange Zeit, Temperaturbehandlung zum "Ausheizen" von Spannungen und ferner Abnutzungserscheinungen der Form durch Reibung der zähfließenden Thermoplastenschmelze bei der Injektion bei hohen Temperaturen, z.B. 200 bis 360°C).

Die Basis des bisher beschriebenen Standes der Technik sind Glas oder thermoplastische Produkte. Die JP-A 5922248, Sumitomo Bakelite Co., Ltd., vom 28.07.82/04.02.84 beansprucht tranparente Trägermaterialien für optische Speicher, die aus einem flüssigen Epoxidahrz in einer Form hergestellt werden und nachträglich mit einer information speichernden Schicht — nicht nur analog den oben beschreibenen DRAW und E-DRAW-Systemen, sondern auch bei CD-ROM-Kopien — versehen werden. Das mit Säureanhydrid und einem Härtungsbeschleuniger vom Imidazoltyp kombinierte, möglichst cycloaliphatische Epoxidharz muß in einer mit Trennmittel versehenen Form 5 Stunden bei 100°C härten. Derartig lange Formenbelegzeiten sind für eine Großserienfabrikation technisch und ökonomisch nicht akzeptabel.

Dem Fachmann ist bekannt, daß höher vernetzte Polymerisate eine größere Volumenkontraktion aufweisen als die meisten Polyadditionssyteme, vor allem als Epoxidharze. Diese Volumenkontraktion kann z.B. eine geringere Festigkeit, u.a. wegen höherer innerer Spannungen und daraus resultierend höhere Doppelbrechungen, bedingen. Wegen der relativ hohen Volumenkontraktion bei transparenten Systemen, die schon im relativ frühen Härtungsstadium auftreten kann, waren generell bei der Herstellung von Plattenkopien mit Informationen (CD-ROMs) keine guten Abformungen der Informations-Pits zu erwarten, insbesondere bei ungesättigten Polyesterharz-, Acrylat- und Methacrylatsystemen.

Es wurde nun überraschenderweise gefunden, daß mit einer Auswahl von Reaktionsmassen auf Basis der genannten ungesättigten Verbindungen durch Härtung mit Peroxiden und gegebenenfalls Beschleunigern sowie gegebenenfalls Zusatzbeschleunigern und Inhibitoren und/oder Strahlung, bevorzugt UV-Strahlung unter Verwendung eines Fotoinitiators, sich im Temperaturbereich zwischen 15 und 100°C in weniger als 15 Minuten die beschriebenen transparenten Substrat- und Kopieplatten (also ohne und mit Informationen in Form von Pits (CD-ROMs)) in hoher Qualität herstellen und entformen lassen. Die Endprodukte zeichnen sich aus durch gerinde bis sehr geringe Doppelbrechung bzw. spezifischen Gangunterschied ( < 20 nm/mm bis gegen 0 nm/mm), geringe Wasseraufnahme, hohe mechanische Stabilität, Wärmeformbeständigkeit und durch eine gute Abformung der Informationsoberfläche. Diese Substrat- und Kopieplatten zeigen die genannten Nachteile der beschriebenen Thermoplasten und des Epoxidharzsystems nicht oder in sehr stark reduziertem Maße. Das gilt insbesondere auch für die Produktionsgeschwindigkeit im Vergleich zu den Epoxydharzsystemen.

Die Reaktionsmassen gemäß der vorliegenden Erfindung enthalten

A. 30 bis 90, vorzugsweise 50 bis 80, Gew.-Teile polymerisierbarer Verbindungen der Formel I und/oder II und

B. 70 bis 10, vorzugsweise 50 bis 20, Gew.-Teile copolymerisierbarer Vinylaromaten der Formel III und gegebenenfalls Ester der Formel IV,

wobei sich die Summe A + B auf 100 Gew.-Teile ergänzt, mit der Maßgabe, daß in Anwesenheit der Verbindungen der Formel II das Molverhältnis der copolymerisierbaren Gruppen von III zu der Summe dieser Gruppen von II und IV mindestens 1 : 1 und das Molverhältnis dieser Gruppen von III zu diesen Gruppen von I mindestens

0,1 : 1, vorzugsweise (0,3 bis 0,5) :1, betragen und daß die Menge A maximal 85 Gewichtsteile beträgt, sofern $R^3 = R^4 = CH_3$.

Zur Herstellung der gehärteten Produkte werden vorzugsweise Reaktionsmittel und gegebenenfalls -hilfsmittel eingesetzt, nämlich

C. 0,01 bis 10, vorzugsweise 0,1 bis 4, Gew.-Teile mindestens eines Polymerisationsinitiators und gegebenenfalls

D. 0,00001 bis 0,5, vorzugsweise 0,00002 bis 0,1, Gew.-Teile mindestens eines Beschleunigers und gegebenenfalls

E. 0,001 bis 2, vorzugsweise 0,001 bis 1, Gew.-Teile mindestens eines Zusatzbeschleunigers und gegebenenfalls

F. 0,00001 bis 0,5, vorzugsweise 0,0001 bis 0,01, Gew.-Teile mindestens eines Inhibitors, jeweils bezogen auf 100 Gew.-Teile (A + B).

Die Härtung kann in bekannter Weise durch Polymerisation bei möglichst niedrigen Temperaturen, vorzugsweise durch Strahlung, z.B. durch UV-Strahlung, zwischen Raumtemperatur und 100°C erfolgen. Gegebenenfalls kann die Restpolymerisation, vor allem bei Polymerisaten mit höheren Glasübergangstemperaturen, durch eine Wärmenachbehandlung (Temperung) oberhalb 50°C, jedoch maximal bei einer Temperatur von $T = T_g + 20°C$, vorzugsweise bei 80 bis 100°C erfolgen.

Formel I :

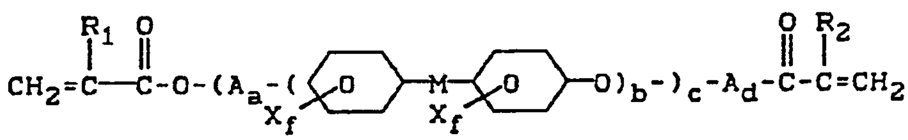

$R^1, R^2$ = —H, —$CH_3$,
a = 1-3, bevorzugt 1-2, b = 1-2,
c = 1-5, bevorzugt 1, 3, 5,
d = 1-3, bevorzugt 1-2,

-M- = 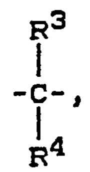, $-SO_2-$, -S-, -O-, $-CH_2-O-CH_2-$,

$-CH_2-O-(CH_2)_e-O-CH_2-$, Einfachbindung

e = 2-6
—X— = —$CH_3$, Halogen (außer I),
f = 0-4

-A- = 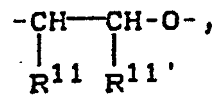

$R^{11}, R^{11'}$ = —H, —$CH_3$ mit der Maßgabe, daß der eine der beiden Substituenten —H und der andere —$CH_3$ ist, und

$R^3$, $R^4$ = -H, $-CH_3$, $-C_2H_5$, 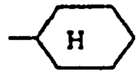 , 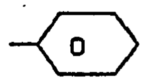 ,

Formel II:

$HO-S_g-(-E-S-)_i-E_h-H$

g,h = Null oder 1,
i = 1-20, bevorzugt 2-10,

-S- = 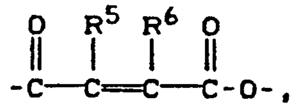 , 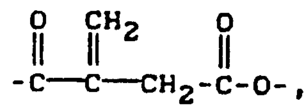 ,

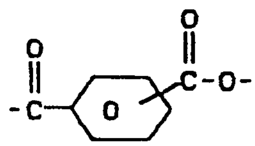

Molverh.: mindestens 1 ethylenisch ungesättigte aliphatische zu 1 aromatische Dicarbonsäure

$R^5$, $R^6$ = -H, $-CH_3$

-E- = 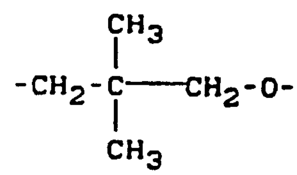 , 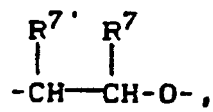 ,

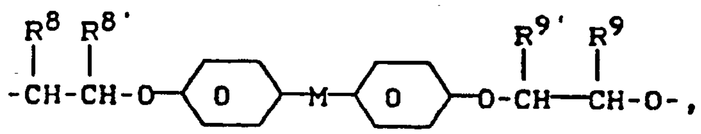

$R^7$, $R^{7'}$ = —H oder —$CH_3$ mit der Maßgabe, daß maximal einer der beiden Substituenten —$CH_3$ sein kann;
$R^8$, $R^{8'}$, $R^9$, $R^{9'}$ = —H oder —$CH_3$ mit der Maßgabe, daß vorzugsweise
entweder $R^8$ oder $R^{8'}$ und
entweder $R^9$ oder $R^{9'}$
—$CH_3$ sind, während der andere mit der gleichen Ziffer bezeichnete Substituent —H ist.

Formel III:

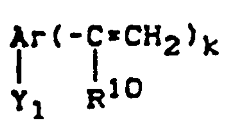

k = 1 oder 2

Ar = ein- oder zweibindiger Rest aus der Benzol-, Naphthalin-, Pyridin-, Anthracen-, Carbazol-Reihe,
—Y = —$CH_3$, Halogen (außer I), —$C(CH_3)_3$ 1 = 0-9 vorzugsweise 0-5

$R^{10}$ = —H, —$CH_3$

Formel IV

Z-S-W

Z, W = 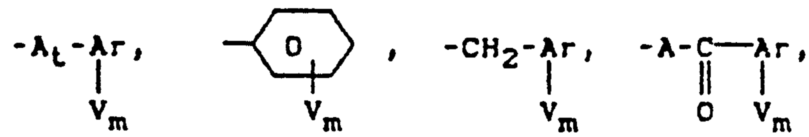

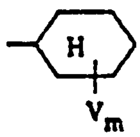

$-O(-CH_2)_n-CH_3$, $-O-C(CH_3)_3$, $-O-CH(CH_3)_2$,

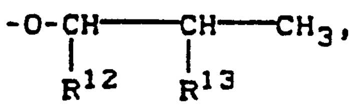

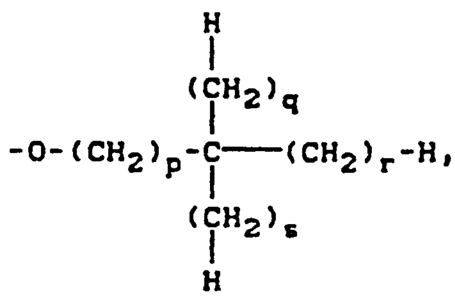

n = 0-3
p = 1-3
q = 1-3
r = 1-3
s = 1-3

wobei auch Z = OH bzw. W = H sein können mit der Maßgabe, daß nicht gleichzeitig Z = OH und W = H sein dürfen,

$R^{11}$, $R^{11'}$ (bei A) = ohne Einschränkung —H bzw. —$CH_3$,
$R^{12}$, $R^{13}$ = —H, —$CH_3$, —$C_2H_5$
m = 0-5, t = 1-3, vorzugsweise 1-2,

V = 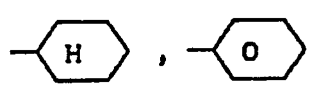 , $C_1$-$C_9$-Alkyl.

Bevorzugte Zusammensetzungen der Reaktionsmassen enthalten :

A) 50 bis 80 Gew.-Teile polymerisierbare Verbindungen der Formel I, wobei a = 1-2 ; b = 1-2 ; c = 1-3 ; d = 1-2 ; f = 0-2,

-M- = 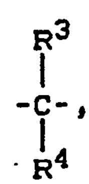 , $R^3$, $R^4$ = -H, $-CH_3$

$—X = —CH_3, —Cl$

A = 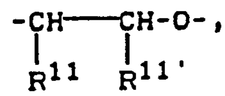

sind, gegebenenfalls in Abmischung mit Verbindungen der Formel II, wobei das Gewichtsverhältnis I/II mindestens 1 : 1 beträgt und wobei

g, h = 0-1; i = 1-10, -S- = 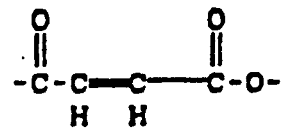

-E- = 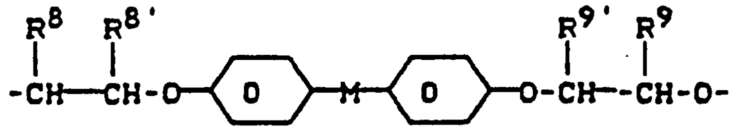

und/oder 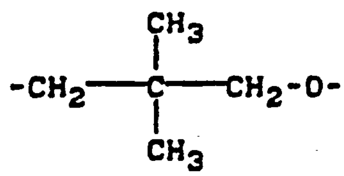 und

$R^8, R^{8'}, R^9, R^{9'} = —H$ oder $—CH_3$ sind, mit der Maßgabe, daß maximal einer der beiden Substituenten $R^8$ und $R^{8'}$ bzw. $R^9$ und $R^{9'}$ $—CH_3$ sein kann, und
B) 50 bis 20 Gew.-Teile copolymerisierbarer Vinylaromaten der Formel III, wobei
k = 1-2 ; 1 = 0-1,
Ar = ein- oder zweibindiger Rest aus der Benzol-, Naphthalin-, Pyridin-, Anthracen-, Carbazol-Reihe,
$Y = —CH_3, —Cl, —C(CH_3)_3$
$R^{10} = —H$
sind,
und gegebenenfalls Verbindungen der Formel IV, wobei

Z, W = 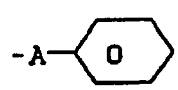 , 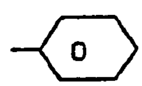 , 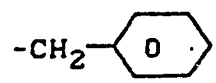 , 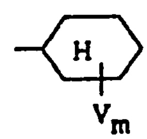

$—O(CH_2)_n—CH_3, —O-C(CH_3)_3, —O-CH(CH_3)_2,$

wobei $R^{11}$, $R^{11'}$ (in A) = ohne Einschränkung $—H$ bzw. $—CH_3$,
m = 0-1 und
n = 0-1 sind.
Besonders bevorzugte Reaktionsmassen sind solche auf Basis der Verbindungen entsprechend der

Formel I:

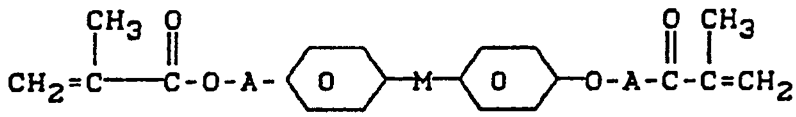

-M- = 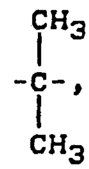

-A- = 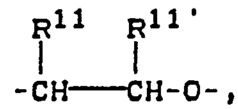

Formel II:

HO-(E-S-)$_i$-E-H    i = 1-2

-S- = 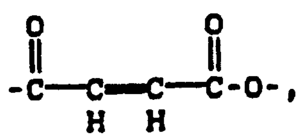

-E- = 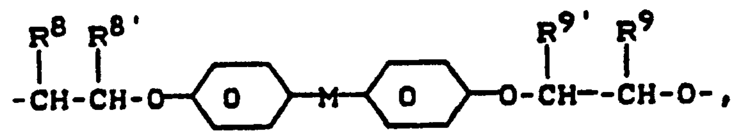

Formel III:

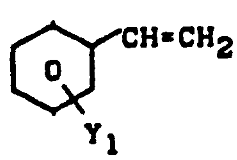

mit Y = —$CH_3$, —$C(CH_3)_3$) ;

1 = Null oder 1

Verbindungen I im Sinne dieser Erfindung sind Acrylester und vorzugsweise Methacrylester von Propoxylierungsprodukten von Bisphenolen, z.B. Sulfonyl-Bisphenol, Thionyl-Bisphenol, Bisphenol -A und -F und

bevorzugt Bisphenol-A und -F oder deren Gemische, mit einem Propoxylierungsgrad von 1-3, bevorzugt 1-2.

Verbindungen der Formel II sind z.B. Kondensate der obengenannten 1,2- bzw. 2,1-propoxylierten Bisphenole — vorzugsweise propoxyliertes Bisphenol-A mit einem mittleren Propoxylierungsgrad von 1 bis 3,5, vorzugsweise 1 bis 1,5 — mit ungesättigten Dicarbonsäuren, wie z.B. Maleinsäure, Citraconsäure, Itaconsäure und vorzugsweise Maleinsäureanhydrid und/oder Fumarsäure.

Die bei der technischen Herstellung der Verbindungen II als Nebenprodukte anfallenden Monoester sind für die erfindungsgemäße Verwendung im allgemeinen unschädlich.

Verbindungen der Formel III sind z.B. Styrol, α-Methylstyrol, p-Methylstyrol, Divinylbenzole, Vinyltoluole, tert.-Butylstyrole, Vinylnaphthaline, Vinylpyridine, Vinylanthracene, Vinylcarbazole, Mono-und/oder Oligochlorstyrole, Mono- und/oder Oligobromstyrole, kernchlorierte α-Methylstyrole, vorzugsweise Styrol, p-Methylstyrol, Monochlorstyrole. Bevorzugte Verbindungen III besitzen nur eine copolymerisierbare Doppelbindung.

Verbindungen der Formel IV sind Kondensationsprodukte, erhältlich durch Veresterung der genannten ungesättigten Dicarbonsäuren, z.B. Maleinsäure, Citraconsäure, Itaconsäure, bevorzugt Maleinsäureanhydrid und Fumarsäure, mit Eth-und/oder Propoxylierungsprodukten von Phenol, Alkylphenolen, Cyclohexylphenolen und/oder Mono- und/oder Oligoalkylnaphtholen, wobei der mittlere Ethoxylierungs- und/oder Propoxylierungsgrad 1 bis 3, vorzugsweise 1 bis 1,5 beträgt, und bei denen die zweite Carboxylgruppe unverestert oder mit den genannten oder anderen Alkoholen, z.B. Methanol, Ethanol, Propanol, n-Butanol, tert.-Butylalkohol, Benzylalkohol, Cyclohexanol, bevorzugt Isopropanol und Isobutanol, verestert ist. Die der Formel IV entsprechenden Produkte können bei der Kondensation entstehende Umesterungsprodukte enthalten.

Geeignete Polymerisationsinitiatoren sind

1. für die Strahlenhärtung, vorzugsweise mit UV-Strahlen : z.B. Benzophenon, 1-Hydroxycyclohexylphenylketon, 2-Methyl-1,4-(methylthio)phenyl-2-morpholinopropanon-1, Benzoin-ether, vorzugsweise Benzoinisopropyl- und -isobutyl-ether, Benzildiketale, vorzugsweise Benzildimethylketal, und gegebenenfalls Gemische der gennanten Verbindungen.
2. für die radikalische Härtung mit organischen Peroxiden und/oder Silylethern des Benzpinakols und/oder Strahlungs/Peroxid-Mischhärtungen : Diacylperoxide, Peroxydicarbonate, Perester, Perketale, Dialkylperoxide, Ketonperoxide, Hydroperoxide, z.B. Bis-(2,4-dichlorbenzoyl)-peroxid, Dilauroylperoxid, Dibenzoylperoxid, Di-2-ethylhexylperoxydicarbonat, Diisopropylperoxydicarbonat, Dicyclohexyl-peroxydicarbonat, Bis-(4-tert.-butylcyclohexyl)-peroxydicarbonat, tert.-Butylperpivalat, tert.-Butyl-per-2-ethylhexanoat, tert.-Butyl-per-3,5,5-trimethylhexanoat, tert.-Butylperbenzoat, tert.-Butyl-permaleinat, 1,1-Bis(tert.-butylperoxy)3,3,5-trimethylcyclohexan, 1,1-Bis(tert.-butylperoxy)cyclohexan, 2,2-Bis-(tert.-butylperoxy)butan, n-Butyl-4,4-bis(tert.-butylperoxy)valerant, Ethyl-3,3-bis(tert.-butylperoxy)butyrat, Dicumylperoxid, tert.-Butylcumylperoxid, Bis(tert.-butylperoxy-isopropyl)benzol, 2,5-Dimethylhexan-2,5-di-tert.-butylperoxid, Di-tert.-butylperoxid, Methylisobutylketonperoxid, Methylethylketonperoxid, Acetylacetonperoxid, Cyclohexanonperoxid, Cumolhydroperoxid, tert.-Butylhydroperoxid und gegebenenfalls Gemische der genannten Verbindungen.

Geeignete Beschleuniger sind in den Reaktionsmassen lösliche anorganische, vorzugsweise organische Salze sowie Komplexverbindungen von Metallen, vorzugsweise von Cobalt und Vanadin, z.B. Cobalt-octoat, -naphthenat, -acetylacetonat, Vanadylacetylacetonat, Vanadylsalze von partiellen Phosphorsäureestern, Pyro- oder Polyphosphorsäureestern, Vanadyloctoat, Vanadylacetat, Vanadyl-p-toluolsulfonat ; ferner Amine, vorzugsweise tertiäre Alkylarylamine, z.B.

N,N-Dimethylanilin, N,N-Diethylanilin, N,N-Dimethyl-p-toluidin, N,N-Bis(β-hydroxyethyl)p-toluidin, N,N-Bis(β-hydroxypropyl)p-toluidin, N,N-Bis-(β-hydroxyethyl)-p-toluidin-phthalat, N,N-bis-(β-hydroxypropyl)-p-toluidinadipat (DE-PS 1943954), tert.-Amin der Formel I nach DE-OS 3202090, worin $R_3$ und $R_5$ = —H und $R_4$ = —$CH_3$ sind (p-Toluidin-Derivat), tert. Amin der Formel I nach DEOS 3202090, worin $R_4$ und $R_5$ Methylgruppen sind (Xylidin-Derivat), tert.-Arylamin-Typ in Gemisch mit N,N-Bis-(β-hydroxyethyl)-m-chlor-anilin (Gewichtsverhältnis 1 : 1 bis 6 : 1).

Geeignete Zusatzbeschleuniger (Promotoren) sind für Härtungen mit Beschleunigern auf Basis von Cobalt-Verbindungen die oben genannten Amine, vorzugsweise N,N-Dimethylanilin, N,N-Diethylanilin, N,N-Dimethyl-p-toluidin, N,N-Bis-β-hydroxyethyl- und/oder -propyl-p-toluidin und/oder deren Ester, z.B. mit Adipinsäure, Phthalsäuren, Monocarbonsäuren ($C_2$-$C_{10}$).

Zusatzbeschleuniger für Vanadinverbindungen sind : Thiole und Thiocarbonsäureester, vorzugsweise Thioglykolsäureester, wie z.B. in der DE-AS 2025410 beschrieben.

Geeignete Inhibitoren sind : Benzochinon, Toluchinon, Naphthochinone, Trimethylbenzochinon, Mono- und Di-tert.-butylbenzochinon und/oder deren Hydrochinone, vorzugsweise Hydrochinon, Toluhydrochinon, 1,4-Naphthohydrochinon, Brenzcatechine — vorzugsweise Mono- und/oder Di-tert.-butyl-brenzcatechine —

sowie deren Mono-alkylether, ferner Chloranil und lösliche Kupfersalze und/oder -Komplexe, z.B. Kupfernaphthenat, -octoat, -acetylacetonat, Kupfer(I)chlorid-Phoshit-Komplexe, sowie Gemische der genannten Verbindungen.

Die Reaktionsmassen können — abhängig von Art und Menge der Komponenten — bei Temperaturen von 10 bis 100, vorzugsweise 20 bis 90°C gehärtet werden.

Datenträgermaterialien sind solche, die entweder

I. die Information beinhalten (z.B. Pits) oder

II. die Information in Form sensibler Stoffe (z.B. Farbstoffe) eingebettet enthalten oder

III. durch eine Informationsschicht (wie sie z.B. Selen-Tellur-Verbindungen und -Legierungen sowie Legierungen und Verbindungen mit tiefem Curie-Punkt darstellen) bedeckt sind.

Die Trägermaterialien können selbsttragend oder nicht selbsttragend sein, wobei es sich bei nicht selbsttragenden Materialien vornehmlich um Zwischenschichten (z.B. auf Glas, Thermoplasten oder Duroplasten) handelt.

Prozentangaben in den nachfolgenden Beispielen beziehen sich auf das Gewicht; Teile sind Gewichtsteile.

## Beispiele

Allgemeine Herstellungs- und Prüfbedingungen

### 1. Formbau

2 Silikat-(Fenster-)Glasscheiben (200 mm × 270 mm × 3 mm) werden mit einem ca. 4 mm (runder Querschnitt) oder 1 mm (rechteckiger Querschnitt) dicken Weich-PVC-Dichtungsband an den 2 langen und einer kurzen Seite der Scheiben auf Abstand gehalten. An diesen Seiten wird die Kombination mittels drei Federstahlklammern (eckiger, U-förmiger Querschnitt, Länge der Klammern : ca, 210 mm) fixiert.

### 2. Trennmittel

Sojalecithin, 5%ig in Xylol

### 3. Härtung

3.1 Temperatur : im allgemeinen Raumtemperatur (23°C), falls nicht anders angegeben.

3.2 Härtungsmethode : Kontinuierliche oder Intervall-Bestrahlung in Gegenwart vom UV-Initiatoren u./o., falls vermerkt, organischer Peroxide, und Beschleuniger und gegebenenfalls Zusatzbeschleuniger und gegebenenfalls Inhibitoren ; senkrecht stehende Form.

3.3 Strahlungsquelle : 4 Leuchtstoffröhren vom Typ TKL 40 W/09, Philips.

3.4 Anstand der Leuchtstoffröhren von der Form : ca. 4,5 cm.

3.5 Wärmebehandlung : im allgemeinen über Nacht bei 90°C ; Abkühlung im Wärmeschrank auf ca. 30°C; danach Entformung ; (falls nicht anders angegeben).

### 4. Doppelbrechung, bzw. spezifischer Gangunterschied im linear polarisierten Licht.

| | |
|---|---|
| Plattendicke : | 0,1 cm bzw. 0,4 cm |
| Meßgerät : | Polarisationsmikroskop |
| Meßrichtung : | M1, d.h. der Meßstrahl verläuft nur senkrecht durch die Gießplatte (senkrecht zur Gießrichtung) |
| Opt. Aussehen : | zwischen zwei um 90 Grad gedrehten Polarisationsfolien |

### 5. Wasseraufnahme

nach ISO/R62, Din 53495 ; Plattendicke : 0,1 cm ; nach 50 Tagen ; (falls nicht anders angegeben)

### 6. Glasübergangstemperatur (Tg)

6.1 Dynamische Glasübergangstemperatur (dyn. Tg) nach DIN 53455 : Prüfkörper : Flachstab (60 mm × 10 mm × 1 mm).

6.2 Glasübergangstemperatur nach Differentialthermoanalyse (Tp n. DTA)

Beispiel 1

1 Mol [4,4'-Bis-(b-hydroxypropyl)-bisphenol-A]-bismethacrylat ; 2 Mol Styrol
(67% Gewichtsanteil/33% Gewichtsanteil)
Initiator : 0,3% Benzildimethylketal, bezogen auf Reaktionsmasse

Härtung :

Dicke 1 mm : 15 Minuten bei 90°C vorgewärmt, 10 Minuten Bestrahlungsdauer (beidseitig), 15 Stunden bei 90°C getempert
Dicke 4 mm : 15 Minuten bei 90°C vorgewärmt, 70 Minuten Bestrahlungsdauer (beidseitig), 15 Stunden bei 90°C getempert.

Beispiel 2

wie Beispiel 1, jedoch Gewichtsanteile der beiden Komponenten : 50% : 50%.

Initiator : wie Beispiel 1

Härtung :

Dicke 1 mm : 15 Minuten bei 90°C vorgewärmt, 10 Minuten Bestrahlungsdauer (beidseitig), 15 Stunden bei 90°C getempert
Dicke 4 mm : 15 Minuten bei 90°C vorgewärmt, 70 Minuten Bestrahlungsdauer (beidseitig), 15 Stunden bei 90°C getempert.

Eigenschaften : siehe Tabelle 1

Tabelle 1

| Beispiel | Doppelbrechung optisch | $M_1$ (nm/mm) | $H_2O$-Aufn. in 50 Tgn. (Gew.-%); Plattendicke 0,1 cm | Tg (°C) | Biege-E-Modul (N/mm²) |
|---|---|---|---|---|---|
| 1 | schwarzgrau (Plattendicke: 0.1 cm) | 0* | 0,37 | 150 (DTA) | 3500 |
| 2 | schwarzgrau (Plattendicke: 0,1 cm) | 0* | 0,29 | 140 (DTA) | 3354 |

* nicht meßbar

**Patentansprüche**

1. Verwendung von härtbaren Reaktionsmassen enthaltend

A. 30 bis 90 Gew.-Teile polymerisierbarer Verbindungen der Formel

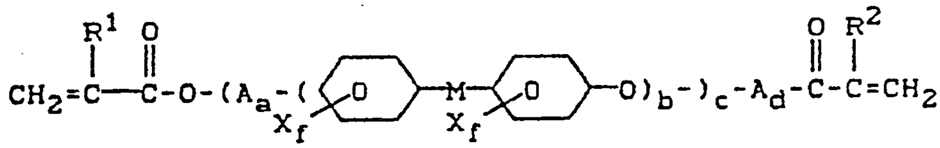 (I)

worin

$R^1$, $R^2$ = —H, —$CH_3$,

a = 1-3, bevorzugt 1-2, b = 1-2,

c = 1-5, bevorzugt 1, 3, 5,

d = 1-3, bevorzugt 1-2,

-M- = 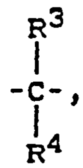, $-SO_2-$, -S-, -O-, $-CH_2-O-CH_2-$,

$-CH_2-O-(CH_2)_e-O-CH_2-$, Einfachbindung

e = 2-6

—X— = —$CH_3$, Halogen (außer I),

f = 0-4

-A- = 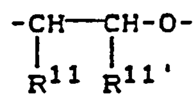,

$R^{11}$, $R^{11'}$ = —H, —$CH_3$ mit der Maßgabe, daß der eine der beiden Substituenten -H und der andere —$CH_3$ ist, und

$R^3$, $R^4$ = -H, $-CH_3$, $-C_2H_5$, 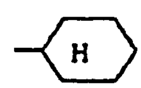, 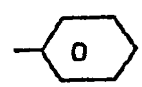,

bedeuten, und/oder der formel

$$HO-S_g-(-E-S-)_r-E_h-H \quad (II)$$

worin

-S- = 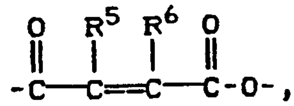, 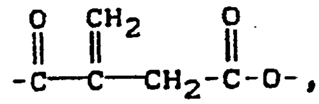,

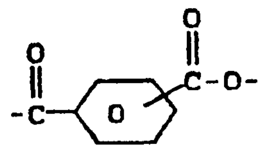

(wobei das Molverhältnis von ethylenisch ungesättigten aliphatischen zu aromatischen Dicarbonsäureresten mindestens 1 : 1 beträgt),
g, h = Null oder 1, i = 1-20, bevorzugt 2-10,
$R^5$, $R^6$ = H, $CH_3$,

-E- = 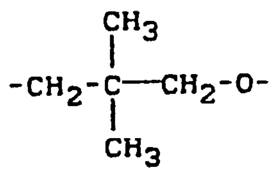, 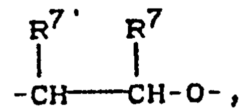,

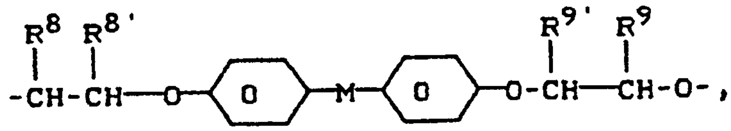,

$R^7$ $R^{7'}$ = H oder —$CH_3$ mit der Maßgabe, daß maximal einer der beiden Substituenten -$CH_3$ sein kann,
$R^8$, $R^{8'}$, $R^9$, $R^{9'}$ = H oder —$CH_3$ bedeuten mit der Maßgabe, daß vorzugsweise entweder $R^8$ oder $R^{8'}$ und entweder $R^9$ oder $R^{9'}$—$CH_3$ sind, während der andere mit der gleichen Ziffer bezeichnete Substituent—H ist,
B) 70 bin 10 Gew.-Teile copolymerisierbarer Vinylaromaten der Formel

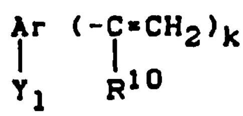 (III)

worin
k = 1 oder 2,
l = Null oder eine ganze Zahl von 1 bis 9, vorzugsweise Null oder eine ganze Zahl von 1 bis 5,
Ar = ein- oder zweibindiger Rest aus der Benzol-, Naphthalin-, Pyridin-, Anthracen-, Carbazol-Reihe,
—Y = —$CH_3$, Halogen (außer I), —$C(CH_3)_3$ und
$R^{10}$ = —H, —$CH_3$ bedeuten, und gegebenenfalls Ester der Formel

Z-S-W (IV)

worin
S wie im Komponente A, Formel (II) definiert ist,

Z, W = 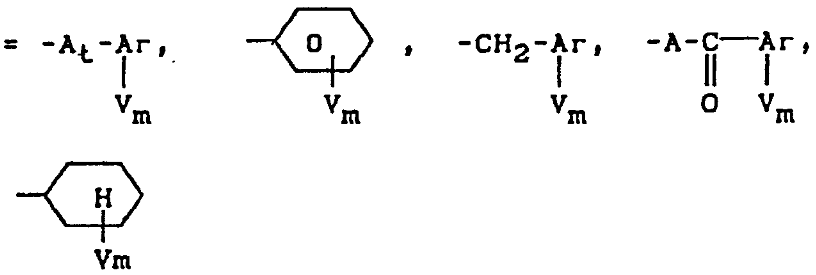

$—O(-CH_2)_n-CH_3$, $—O-C(CH_3)_3$, $—O-CH(CH_3)_2$,

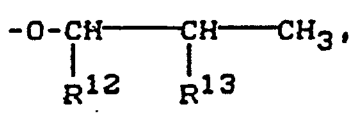

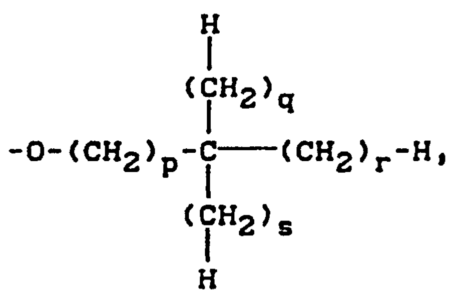

n = 0-3
p = 1-3
q = 1-3
r = 1-4
s = 1-3

wobei A wie in Komponente A, Formel (I) definiert ist und wobei auch Z = OH bzw. W = H sein können mit der Maßgabe, daß nicht gleichzeitig Z = OH und W = H sein dürfen,

$R^{11}$, $R^{11'}$ (bei A) = ohne Einschränkung —H bzw. $—CH_3$,

m = Null oder eine ganze Zahl von 1-5,

t = 1-3, vorzugsweise 1-2,

V = 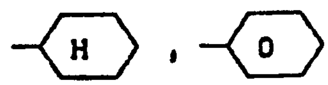 , $C_1$-$C_9$-Alkyl,

$R^{12}$, $R^{13}$ = —H, $—CH_3$, $—C_2H_5$

bedeuten,

wobei sich die Summe A + B auf 100 Gew.-Teile ergänzt,

mit der Maßgabe, daß in Anwesenheit der Verbindungen der Formel (II) das Molverhältnis der copolymerisierbaren Gruppen von III zu der Summe dieser Gruppen II und IV mindestens 1 : 1 und das Molverhältnis dieser Gruppen von III zu diesen Gruppen von I mindestens 0,1 : 1, vorzugsweise (0,3 bis 0,5) : 1 betragen und daß die Menge A maximal 85 Gewichtsteile beträgt, sofern $R^3$ = $R^4$ = $CH_3$,

zur Herstellung von Trägermaterialien für optisch und/oder magnetisch les-und/oder beschreibbare Datenträger.

2. Verwendung nach Anspruch 1, dadurch gekennzeichnet, daß die Reaktionsmassen 50 bis 80 Gew.-Teile A und 50 bis 20 Gew.-Teile B enthalten, wobei sich die Summe A + B auf 100 Gew.-Teile ergänzt.

## Claims

1. The use of curable catalyzed resins containing

A. 30 to 90 parts by weight polymerizable compounds corresponding to the following formula

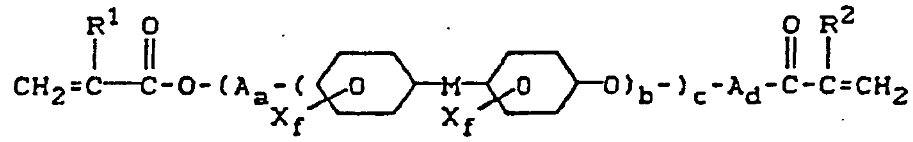 (I)

in which
$R^1$, $R^2$ = —H, —$CH_3$,
a = 1-3, preferably 1-2, b = 1-2,
c = 1-5, preferably 1, 3, 5
d = 1-3, preferably 1-2,

-M- = 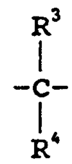 , $-SO_2-$, -S-, -O-, $-CH_2-O-CH_2-$,

$—CH_2-O-(CH2)_e-O-CH_2—$, single bond

e = 2-6
—X— = —$CH_3$, halogen (except I),
f = 0.4

-A- = 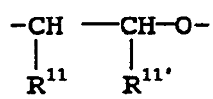

$R^{11}$, $R^{11'}$ = —H, —$CH_3$, with the proviso that one of the two substituents is —H and the other is —$CH_3$ and

$R^3$, $R^4$ = -H, $-CH_3$, $-C_2H_5$, 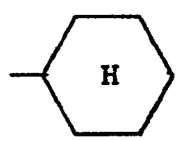 , 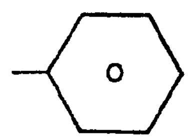 ,

and/or to the following formula

$$HO-S_g-(-E-S-)_i-E_h-H \quad (II)$$

in which

-S- = 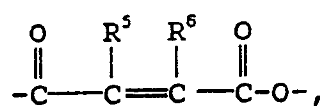 , 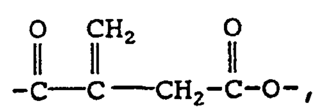 ,

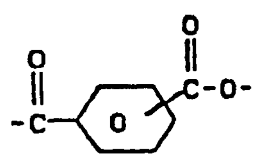

(the molar ratio of ethylenically unsaturated aliphatic to aromatic dicarboxylic acid residues being at least 1 : 1),
g, h = 0 or 1, i = 1-20, preferably 2-10,

$R^5$, $R^6$ = H, $CH_3$,

-E- = 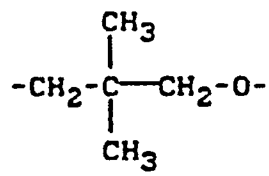 , 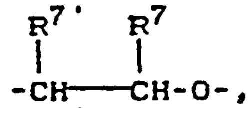

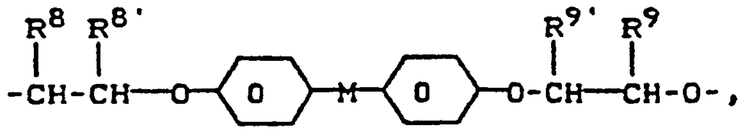

$R^7$, $R^{7'}$ = H or $-CH_3$, with the proviso that at most one of the two substituents may represent $-CH_3$, $R^8$, $R^{8'}$, $R^9$, $R^{9'}$ = H or $-CH_3$, with the proviso that preferably either $R^8$ or $R^{8'}$ and either $R^9$ or $R^{9'}$ represent $-CH_3$ while the other substituent denoted by the same number is $-H$,

B) 70 to 10 parts by weight copolymerizable aromatic vinyl compounds corresponding to the following formula

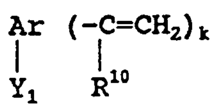 (III)

in which

k = 1 or 2,

l = 0 or an integer of 1 to 9, preferably zero or an integer of 1 to 5,

Ar = single-bond or two-bond residue from the benzene, naphthalene, pyridine, anthracene, carbazole series,

$-Y = -CH_3$, halogen (except I), $-C(CH_3)_3$ and

$R^{10} = -H, -CH_3$,

and optionally esters corresponding to the formula

Z-S-W (IV)

in which

S is as defined for component A, formula (II),

Z, W = 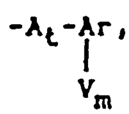 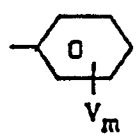 , 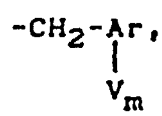 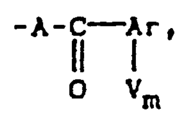

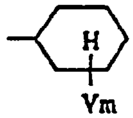

$$-O(-CH_2)_n-CH_3, -O-C(CH_3)_3, -O-CH(CH_3)_2,$$

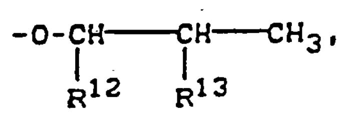

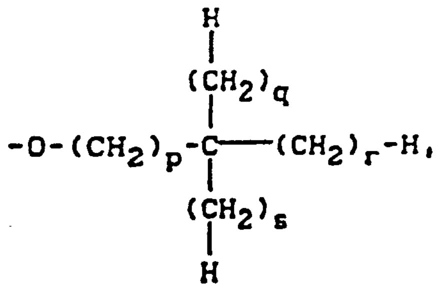

n = 0-3
p = 1-3
q = 1-3
r = 1-4
s = 1-3

where A is as defined for component A, formula (I), and Z may also be OH or W may be H, with the proviso that Z cannot be OH and W cannot be H at one and the same time,
$R^{11}$, $R^{11'}$ (for A) = -H or $-CH_3$ without limitation,
m = 0 or an integer of 1 to 5,
t = 1 to 3, preferably 1 to 2,

V = 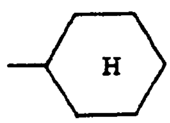 , 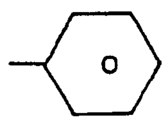 , $C_{1-9}$ alkyl,

$R^{12}$, $R^{13}$ = —H, —$CH_3$, —$C_2H_5$,
A and B together adding up to 100 parts by weight,
with the proviso that, in the presence of the compounds corresponding to formula (II), the molar ratio of the copolymerizable groups of III to the sum of these groups II and IV is at least 1 : 1 and the molar ratio of these groups of III to these groups of I is at least 0.1 : 1 and preferably (0.3 to 0.5) : 1 and that the quantity of A is at most 85 parts by weight where $R^3$ = $R^4$ = $CH_3$,
for the production of support materials for optically and/or magnetically readable and/or recordable data storage media.

2. The use claimed in claim 1, characterized in that the catalyzed resins contain 50 to 80 parts by weight A and 50 to 20 parts by weight B, the sum of A + B being 100 parts by weight.

## Revendications

1. Utilisation de mélanges réactionnels durcissables contenant
A. 30 à 90 parties en poids de composés polymérisables de formule

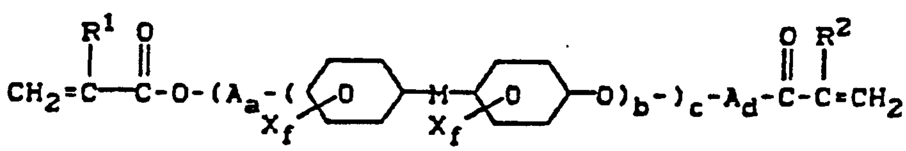 (I)

dans laquelle,
$R^1$, $R^2$ = —H, —$CH_3$,
a = 1-3, de préférence 1-2, b = 1-2,
c = 1-5, de préférence 1, 3, 5,
d = 1-3, de préférence 1-2,

-M- = 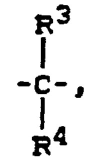 , $-SO_2-$, -S-, -O-, $-CH_2-O-CH_2-$,

$-CH_2-O-(CH_2)_e-O-CH_2-$,

une liaision simple,
e = 2-6
—X— = —$CH_3$, un halogène (excepté I),
f = 0-4

-A- = 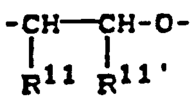 ,

$R^{11}$, $R^{11'}$ = —H, —$CH_3$, sous réserve que l'un des deux substituants soit —H et l'autre soit —$CH_3$ et

$R^3$, $R^4$ = -H, $-CH_3$, $-C_2H_5$, 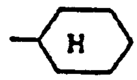 , 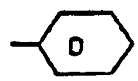 ,

et/ ou de formule

$$HO\text{-}S_g\text{-}(\text{-}E\text{-}S\text{-})_i\text{-}E_h\text{-}H \quad (II)$$

dans laquelle

-S- = -S- = 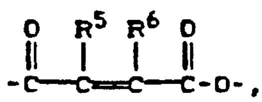 , 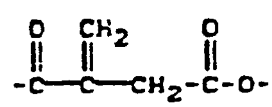 ,

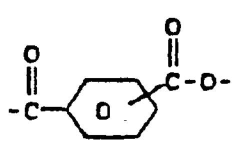

(le rapport molaire des acides dicarboxyliques aliphatiques à non-saturation éthylénique aux esters d'acides dicarboxyliques aromatiques s'élevant au moins à 1 : 1),
g, h = zéro ou 1, i = 1-20, de préférence 2-10,
$R^5$, $R^6$ = H, $CH_3$,

-E- = 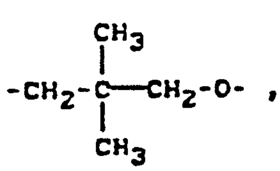 , 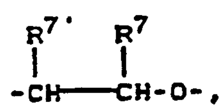 ,

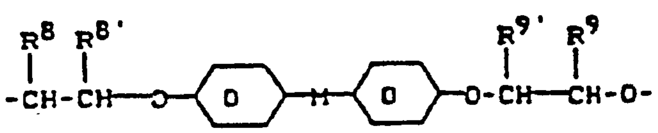 ,

$R^7$, $R^{7'}$ = H ou —$CH_3$, sous réserve qu'au maximum l'un des deux substituants puisse être —$CH_3$,
$R^8$, $R^{8'}$, $R^9$, $R^{9'}$ = H ou —$CH_3$, sous réserve que de préférence $R^8$ ou $R^{8'}$ et $R^9$ ou $R^{9'}$ représentent —$CH_3$, tandis que l'autre substituant affecté du même chiffre représente —H,
B) 70 à 10 parties en poids de composés aromatiques vinyliques copolymérisables de formule

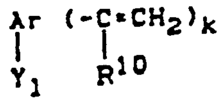 (III)

dans laquelle
k = 1 ou 2,
l = zéro ou un nombre entier de 1 à 9, de préférence zéro ou un nombre entier de 1 à 5,
Ar est un reste monovalent ou divalent de la série du benzène, du naphtalène, de la pyridine, de l'anthracène, du carbazole,
—Y— = —$CH_3$, un halogène (excepté I), un groupe —$C(CH_3)_3$ et
$R^{10}$ = —H, —$CH_3$,
et, le cas échéant, des esters de formule

Z-S-W (IV)

où
S est défini composant le composant A dans la formule (II),

Z, W = 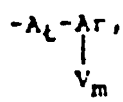, 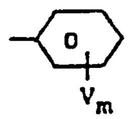, 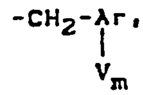, 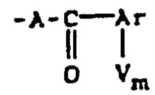,

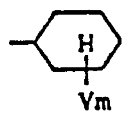

—O(-$CH_2$)$_n$-$CH_3$, —O-$C(CH_3)_3$, —O-$CH(CH_3)_2$,

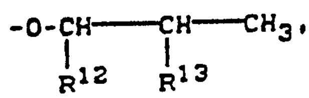,

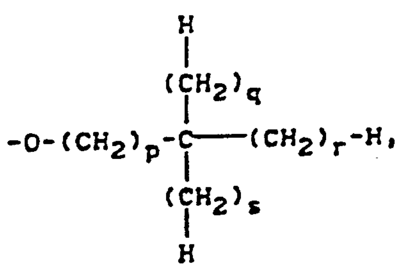

n = 0-3
p = 1-3
q = 1-3
r = 1-4
s = 1-3

où A a la même définition que le composant A de la formule (I) de même que Z peut représenter OH et W peut représenter H, sous réserve qu'il ne puisse pas y avoir en même temps Z = OH et W = H,
$R^{11}$, $R^{11'}$ (pour A) = sans limitation —H ou —$CH_3$,
m = zéro ou un nombre entier de 1 à 5,
t = 1-3, de préférence 1-2,

V = 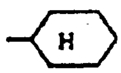 , 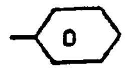 , groupe alkyle en $C_1$ à $C_9$

$R^{12}$, $R^{13}$ = —H, —$CH_3$, —$C_2H_5$,
la somme A + B totalisant 100% en poids,
sous réserve qu'en présence des composés de formule (II), le rapport molaire des groupes copolymérisables de III à la somme de ces groupes II et IV soit au moins égal à 1 : 1 et le rapport molaire de ces groupes de III à ces groupes de I soit au moins égal à 0,1 :1, de préférence à (0,3 à 0,5) : 1 et que la quantité A s'élève au maximum à 85 parties en poids, dans la mesure où $R^3 = R^4 = CH_3$,
pour la production de matières de support destinées à des supports d'informations à possibilité de lecture et/ou d'écriture optiques et/ou magnétiques.

2. Utilisation suivant la revendication 1, caractérisée en ce que les mélanges réactionnels contiennent 50 à 80 parties en poids de A et 50 à 20 parties en poids de B, la somme A + B totalisant 100 parties en poids.